# EUROPÄISCHE PATENTSCHRIFT

(11) **EP 0 672 569 B1**
(45) Veröffentlichungstag und Bekanntmachung des Hinweises auf die Patenterteilung: **24.09.1997**
(21) Anmeldenummer: 95103652.4
(22) Anmeldetag: 14.03.1995
(51) Int. Cl.: B62B 3/14

(54) **Einkaufswagen**
Shopping trolley
Chariot d'achat

(30) Priorität: 14.03.1994 DE 9404262 U
(43) Veröffentlichungstag der Anmeldung: 20.09.1995
(73) Patentinhaber: WANZL METALLWARENFABRIK GMBH, D-89336 Leipheim (DE)
(72) Erfinder: Eberlein, Herbert, D-89347 Bubesheim (DE)

(56) Entgegenhaltungen:
- EP-A- 0 254 210
- EP-A- 0 620 146
- US-A- 2 890 058

## Beschreibung

Die Erfindung betrifft einen Einkaufswagen mit einem Fahrgestell, mit einer Schiebeeinrichtung und mit einem Korb, der von nach oben gerichteten oder von nach oben gekrümmten Trägern des Fahrgestelles getragen wird, wobei der Einkaufswagen so gestaltet ist, daß dieser in einen gleichen Einkaufswagen platzsparend einschiebbar ist und im hinteren Bereich eine aus einem ortsfesten und aus einem beweglichen Teil bestehende, zwischen den Trägern angeordnete Ablage aufweist, die zum Abstellen von weiterem Einkaufsgut bestimmt ist und bei der das bewegliche Teil um eine horizontale Achse bewegbar am ortsfesten Teil so angeordnet ist, daß es in Gebrauchslage einen rückwärtigen Anschlag für auf die Ablage abgestellte Gegenstände bildet und in Richtung zum ortsfesten Teil in die Nichtgebrauchslage und wieder zurück in die Gebrauchslage verschwenkbar ist.

Einkaufswagen, die in ihrem rückwärtigen Bereich eine Ablage für weiteres Einkaufsgut aufweisen, sind beispielsweise in den europäischen Patentschriften EP 0 141 398, EP 0 254 210 und EP 0 402 551 näher beschrieben. Diese Einkaufswagen sind so gestaltet, daß sie in der Lage sind, bevorzugt Getränkekisten auf ihren Ablagen zu transportieren.
Zum nächstliegenden Stand der Technik zählt ein Einkaufswagen der Fa. Brüder Siegel GmbH & Co. KG in D-89340 Leipheim und der im Prospekt 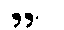 Auf einen Blick" auf Seite 2 unter der Bezeichnung 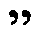 Solo" abgebildet ist. Dieser Einkaufswagen weist an seinem rückwärtigen Bereich eine aus einem ortsfesten und aus einem beweglichen Teil bestehende Ablage auf, wobei der ortsfeste Teil am Fahrgestell oder an der Unterseite des Korbes befestigt und der bewegliche Teil uni eine horizontale Achse verschwenkbar am hinteren Ende des ortsfesten Teiles angelenkt ist. Auch diese Ablage dient zum Abstellen von wenigstens einer Getränkekiste, wobei die Träger des Fahrgestelles seitliche Anschläge und das bewegliche Teil einen rückwärtigen Anschlag für die Getränkekiste bilden.

Nun gibt es Märkte, die ihre Getränke nicht in Getränkekisten, sondern in Schrumpfverpackungen anbieten, in welchen sich eine Anzahl Flaschen befinden. Weder mit den eingangs genannten, noch mit dem zum nächstliegenden Stand der Technik zählenden Einkaufswagen ist es jedoch möglich, z.B. schrumpfverpackte Flaschen oder auch andere größere Verkaufsgegenstände wie Waschmittelschachteln, Waschmittelflaschen, WC-Papier und dergleichen auf der Ablage zu transportieren, ohne riskieren zu müssen, daß diese Gegenstände von der Ablage herabfallen. Die Ursache ist darin begründet, daß die Ablagen so konstruiert und gestaltet sind, daß sie sich im Grunde ausschließlich zum Tragen von Getränkekisten eignen, aus wenig Bauteilen zusammengesetzt sind und große Durchbrüche aufweisen, durch welche die anderen erwähnten Artikel hindurch- oder neben der Ablage herabfallen würden, da sich zwischen den Trägern des Fahrgestelles und der Ablage ebenfalls große Zwischenräume befinden.

Die Aufgabe der Erfindung besteht darin, einen gattungsgemäßen Einkaufswagen so weiterzuentwickeln, daß mit dessen Ablage auf sichere Weise auch anderweitiges Einkaufsgut, also nicht oder nicht nur Getränkekisten transportierbar sind.

Die Lösung der Aufgabe besteht darin, daß das bewegliche und/oder das ortsfeste Teil der Ablage mit seitlich angeordeten, in Längsrichtung des Einkaufswagens sich erstreckenden Stützwänden ausgestattet ist, welche seitliche Anschläge für die auf der Ablage abgestellten Gegenstände bilden und daß sich die Stützwände in Nichtgebrauchslage des beweglichen Teils außerhalb jener Räume befinden, welche die Träger eines rückwärtigen Einkaufswagens benötigen, wenn dieser in einen vorausbefindlichen Einkaufswagen eingeschoben wird.

Der Vorteil der Erfindung besteht darin, daß durch das ortsfeste Teil, durch das bewegliche Teil und durch die Stützwände zusammen mit der Rückwand des Korbes eine Art Behältnis oder Tasche gebildet ist, das oder die nach oben offen ist und die auf der Ablage abgestellten Gegenstände nach allen Seiten umgrenzt, so daß diese nicht von der Ablage, insbesondere zur Seite herabfallen können. Es ist ferner von Vorteil, daß die Stützwände so angeordnet sind, daß sie den Ineinanderschiebevorgang zweier oder mehrerer Einkaufswagen nicht behindern. Mit einem derart gestalteten Einkaufswagen lassen sich nunmehr auf sichere Weise Warengebinde, Schachteln, größere Dosen und dergleichen transportieren, die gewöhnlich etwas kleiner sind, als die üblichen großen Getränkekisten, wobei nicht ausgeschlossen ist, daß auch Getränkekisten auf der neuen Ablage abstellbar sind, sofern dies die Gestaltung und die Abmessungen eines neuheitsgemäßen Einkaufswagens zulassen.

Die Erfindung wird anhand einiger Ausführungsbeispiele näher erläutert. Es zeigt
- Fig. 1: einen Einkaufswagen mit Ablage, dessen Korb von nach oben gekrümmten Trägern getragen wird;
- Fig. 2: einen weiteren Einkaufswagen mit Ablage, dessen Korb von nach oben gerichteten Trägern getragen wird;
- Fig. 3: eine Ablage in Draufsicht;
- Fig. 4: zwei ineinandergeschobene Einkaufswagen in Seitenansicht;
- Fig. 5: die gleichen Einkaufswagen gemäß Fig. 4 in der Draufsicht sowie
- Fig. 6: ein zweckmäßiges Ausführungsbeispiel einer Ablage.

Die Erfindung läßt sich bei einer Vielzahl unterschiedlichst gestalteter Einkaufswagen verwirklichen. Die Beschreibung der Erfindung beschränkt sich jedoch auf zwei Einkaufswagenformen, die sich in der Vergangenheit als die gängigsten erwiesen haben.

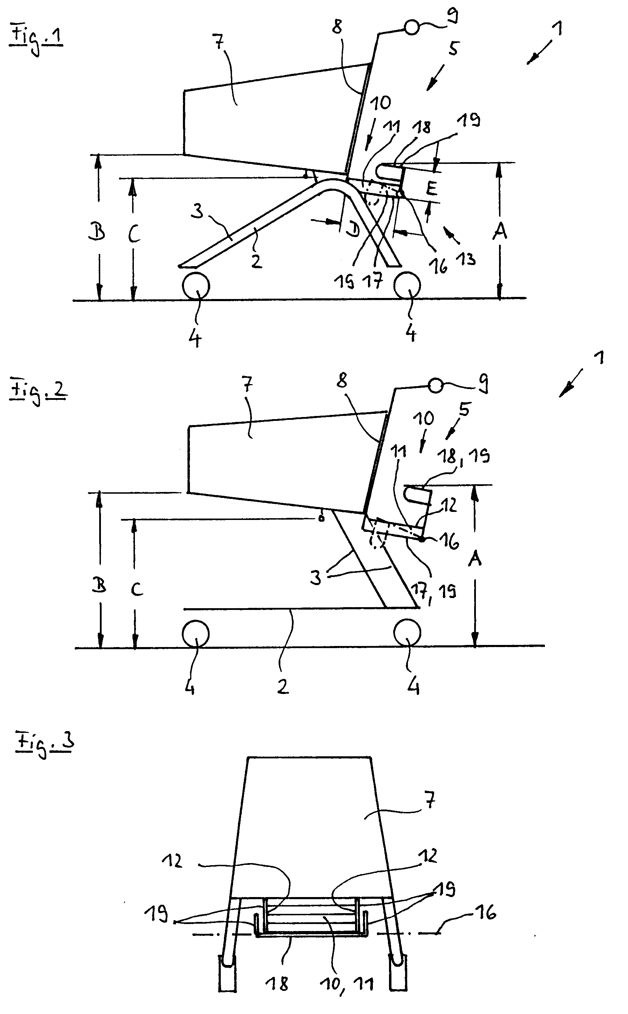

Der in Fig. 1 dargestellte Einkaufswagen 1 weist ein aus zwei miteinander verbundenen, nach oben gekrümmten Trägern 3 gebildetes Fahrgestell 2 auf, das mit Rollen 4 ausgestattet ist. Die Träger 3 tragen einen Korb 7, wobei eine Schiebeeinrichtung 9 zum Bewegen des Einkaufswagens 1 vorgesehen ist. Ein derartiger Einkaufswagen 1 ist beispielsweise in der DE 31 01 844 C2 beschrieben, wobei die Träger 3 auch aus Drähten gebildet sein können, wie dies aus der FR 2 537 076 hervorgeht. Der Einkaufswagen 1 ist so gebaut, daß er mit gleichen Einkaufswagen 1' platzsparend ineinanderschiebbar ist, wobei, um diesen Zweck erfüllen zu können, die Rückwand 8 des Korbes 7 in bekannter Weise verschwenkbar angeordnet ist. Im hinteren Bereich 5, nahe der Schiebeeinrichtung 9, ist eine zwischen den Trägern 3 angeordnete Ablage 10 vorgesehen, die zum Abstellen von Einkaufsgut bestimmt ist, das beispielsweise nicht im Korb 7 befördert werden soll. Die Ablage 10 ist so gestaltet und angeordnet, daß sie das platzsparende Ineinanderschieben mehrerer Einkaufswagen 1, 1' nicht behindert. Die Ablage 10 besteht aus einem am Fahrgestell 2 und/oder am Korb 7 befestigten ortsfesten Teil 11 und aus einem beweglichen Teil 18, das am ortsfesten, eine Abstellfläche 17 bildenden Teil 11 um eine horizontale Achse 16 verschwenkbar gelagert ist. Das bewegliche Teil 18 ist in Gebrauchslage nach oben gerichtet und bildet einen rückwärtigen Anschlag für auf die Ablage 10 gestellte Gegenstände. Das bewegliche Teil 18 läßt sich in Schieberichtung des Einkaufswagens 1, also nach vorne auf das ortsfeste Teil 11 klappen oder verschwenken. Zumindest das bewegliche, oder wenigstens das ortsfeste Teil 11, 18 weist in Schieberichtung betrachtet links und rechts, also zu beiden Seiten je eine zumindest annähernd in Längsrichtung des Einkaufswagens 1 sich erstreckende Stützwand 19 auf. Die ortsfest angeordneten Stützwände 19 bilden seitliche Begrenzungen für auf die Ablage 10 gestellte Gegenstände, wobei die Rückwand 8 des Korbes 7 eine weitere Begrenzung bildet. Im Beispiel ist das bewegliche Teil 18 in Gebrauchslage nur so weit nach oben geführt (Maß A), daß es vom Korb 7 (Maß B) oder von einem weiteren Teil eines rückwärtig einzuschiebenden Einkaufswagens 1' oder von dessen Fahrgestell 2 nicht erfaßt wird. Beim Ineinanderschieben zweier Einkaufswagen 1, 1' bleibt das bewegliche Teil 18 in seiner Gebrauchslage. Das Maß A ist demnach kleiner, als die Maße B und C. Es ist natürlich zweckmäßig, die Höhe des beweglichen Teiles 18 (Maß E) kleiner zu halten, als die Tiefe (Maß D) des ortsfesten Teiles 11. Dadurch kann das bewegliche Teil 18 jederzeit von Hand auf das ortsfeste Teil 11 geklappt werden, sollte es beim Einkaufsvorgang auf irgend eine Weise hinderlich sein. Die Stützwände 19, die nicht unbedingt wörtlich wie eine Wand gestaltet sein müssen, sondern lediglich eine Begrenzungs- und Anschlagfunktion ausüben, sind mindestens so hoch gestaltet, daß sie imstande sind, handelsübliche 1-Liter-Flaschen vor dem seitlichen Herabfallen zu schützen. Sowohl das bewegliche, als auch das ortsfeste Teil 11, 18 können mit Stützwänden 19 ausgestattet sein. Das ortsfeste Teil 11 ist tiefer angeordnet als der Boden des Korbes 7. Am hinteren Bereich 13 des ortsfesten Teiles 11 ist das bewegliche Teil 18 begrenzt verschwenkbar angelenkt. Die Verschwenkbarkeit wird durch nicht näher dargestellte Anschläge so begrenzt, daß das bewegliche Teil 18 nach rückwärts nur so weit in seine Gebrauchslage bewegbar ist, daß es einen Winkel zur Abstellfläche 17 des ortsfesten Teils 11 von höchstens 120°, bevorzugt jedoch etwa 90° bildet.

Bei dem in Fig. 2 dargestellten Einkaufswagen 1 sind die Träger 3 des ebenfalls mit Rollen 4 ausgestatteten Fahrgestelles 2 nach oben gerichtet. Sie tragen den mit einer schwenkbaren Rückwand 8 ausgestatteten Korb 7. Ein Einkaufswagen 1 dieser bekannten Bauweise ist z.B. in der DE 30 43 599 C2 beschrieben. Der in Fig. 2 beschriebene Einkaufswagen 1 weist ebenfalls im hinteren Bereich 5 eine Ablage 10 auf, deren Anordnung und Ausführung gleich oder ähnlich jener Ablage 10 ist, die in Fig. 1 beschrieben ist. Allerdings ist bei diesem Ausführungsbeispiel die Höhe des in Gebrauchslage sich befindlichen beweglichen Teils 18 (Maß A) so gewählt, daß entweder der Korb 7 (Maß B) oder ein anderes Teil (Maß C) eines rückwärtig einzuschiebenden Einkaufswagens 1' an das bewegliche Teil 18 eines vorausbefindlichen Einkaufswagens 1 anstößt und dieses nach vorne auf das ortsfeste Teil 11 verschwenkt. Ausführung und Anordnung der in Fig. 1 und 2 beschriebenen Ablagen lassen sich selbstverständlich vertauschen. So ist die in Fig. 1 beschriebene Ablage am Einkaufswagen 1 gemäß Fig. 2 und umgekehrt verwendbar. Das ortsfeste Teil 11 nimmt bei beiden beschriebenen Ausführungsarten bevorzugt eine nach rückwärts geneigte Lage ein, um zur Rückwand 8 des Korbes 7 bevorzugt oder annähernd rechtwinklig angeordnet zu sein. Bei beiden Ausführungsbeispielen ist die Nichtgebrauchslage des beweglichen Teiles 18 strichpunktiert dargestellt, wobei die Stützwände 19 des beweglichen Teiles 18 weiter nach unten reichen können, als das ortsfeste Teil 11. Die Stützwände 19 des beweglichen Teiles 18 können dabei außerhalb des ortsfesten Teiles 11 an dessen seitlichen Begrenzungen 12 vorbeigeführt sein, so daß das bewegliche Teil 18 breiter ist, als das ortsfeste Teil 11. Die Stützwände 19 des beweglichen Teiles 18 können aber auch durch zwei an der Abstellfläche 17 des ortsfesten Teiles 11 befindliche, nicht näher dargestellte Schlitze hindurchgeführt sein. In diesem Falle ist das bewegliche Teil 18 schmäler, als das ortsfeste Teil 11.

Fig. 3 zeigt in einer Draufsicht und schematisch dargestellt den Korb 7 und die Ablage 10. Der Grundriß des ortsfesten Teiles 11 bildet bevorzugt ein Rechteck. Die horizontale Achse 16 des beweglichen Teiles 18 ist strichpunktiert eingezeichnet. Das bewegliche Teil 18 befindet sich in Gebrauchslage. Seine Stützwände 19 führen an den äußeren Begrenzungen 12 des ortsfesten Teiles 11 vorbei. Dies gilt auch in Nichtgebrauchslage des beweglichen Teiles 18. Die Stützwände 19 erstrecken sich in Schieberichtung des Einkaufswagens 1.

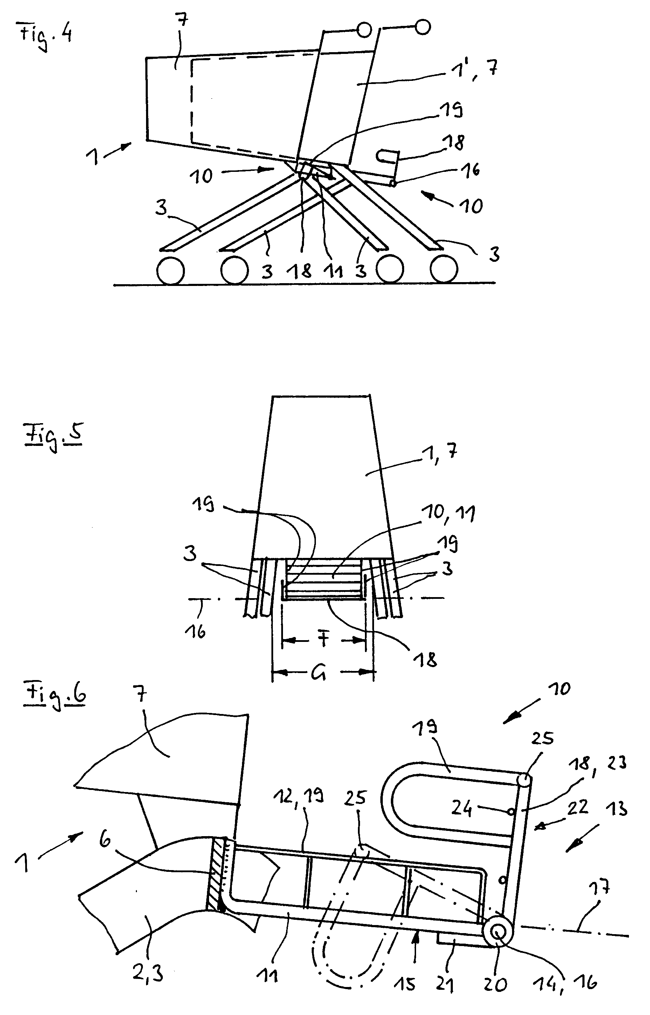

Fig. 4 und 5 zeigen zwei ineinandergeschobene Einkaufswagen 1, 1' jener Bauweise, wie in Fig. 1 beschrieben. Der Korb 7 des rückwärtigen Einkaufswagens 1' hat beim Zusammenschiebevorgang das bewegliche Teil 18 der Ablage 10 des vorausbefindlichen Einkaufswagens 1 nach unten in die Nichtgebrauchslage gestoßen. Das bewegliche Teil 18 liegt auf dem ortsfesten Teil 11 auf. Die Träger 3 der Einkaufswagen 1, 1' sind so geformt und angeordnet, daß die Träger 3 des rückwärtigen Einkaufswagens 1' nicht an den Stützwänden 19 des ortsfesten und/oder des beweglichen Teiles 11, 18 des vorausbefindlichen Einkaufswagens 1 anstoßen. Dabei gibt es zwei Möglichkeiten, um dies zu erreichen. Die erste Möglichkeit besteht darin, den vorderen Bereich der Träger 3 so weit nach unten zu ziehen, daß die Träger 3 des rückwärtigen Einkaufswagens 1' die Ablage 10 des vorausbefindlichen Einkaufswagens 1 unterfahren, ohne an diese anzustoßen. Dabei können Teile der Ablage 10, so auch die Stützwände 19 insbesondere des beweglichen Teils 18, die ja in Nichtgebrauchslage des beweglichen Teils 18 relativ weit nach unten ragen können, direkt lotrecht über den Trägern 3 des rückwärtigen Einkaufswagens 1' angeordnet sein. Eine derartige Anordnung ist aus Fig. 4 ersichtlich. Die zweite Möglichkeit, die Stützwände 19 des in Nichtgebrauchslage befindlichen beweglichen Teiles 18 eines vorausbefindlichen Einkaufswagens 1 vor dem Anstoßen an die Träger 3 eines rückwärtigen einzuschiebenden Einkaufswagens 1' zu bewahren, besteht darin, daß die Breite F des beweglichen Teils 18 der Ablage 10 schmäler ist, als die lichte Weite G zweier Träger 3 eines rückwärtigen Einkaufswagens 1', die auf Höhe der vorausbelindlichen Ablage 10 meßbar ist. Gleiches gilt analog auch bei dem in Fig. 2 gezeigten Einkaufswagen 1. Die Stützwände 19 des in Nichtgebrauchslage befindlichen beweglichen Teils 18 befinden sich demnach außerhalb jener Räume, welche die Träger 3 eines rückwärtigen Einkaufswagens 1' benötigen, wenn dieser in einen vorausbefindlichen Einkaufswagen 1 eingeschoben wird.

Fig. 6 zeigt abschließend ein zweckmäßiges Ausführungsbeispiel einer erfindungsgemäßen Ablage 10 in Seitenansicht. Gewöhnlich weisen alle Einkaufswagen 1 in jenem Bereich, in welchem der Korb 7 auf den Trägern 3 ruht, eine die Träger 3 verbindende Querstrebe 6 auf, die neben einer stirnseitigen Querverbindung am Fahrgestell 2 dazu beiträgt, dieses stabil zu gestalten. Das ortsfeste Teil 11 der Ablage 10 ist in zweckmäßiger Weise an diese Querstrebe 6 angeschweißt oder angeschraubt. Das bevorzugt aus unterschiedlich starken Drähten gebildete ortsfeste Teil 11 ist als Gitterrost oder gitterähnliche Konstruktion gestaltet. Seine ebene Fläche bildet die Abstellfläche 17 für die Gegenstände. An den beiden Seiten 12 des ortsfesten Teiles 11 befindet sich je eine Stützwand 19. Die Stützwände 19 können am ortsfesten Teil 11 angeformt, oder als separate Wände angeschraubt oder angenietet sein. An seinem hinteren Bereich 13 weist das ortsfeste Teil 11 einen Querstab 14 auf, der die quer zur Schieberichtung des Einkaufswagens 1 sich erstreckende horizontale Achse 16 für das bewegliche Teil 18 bildet und das als rückwärtiger Anschlag für die Gegenstände bestimmt ist. Das ebenfalls aus Draht gefertigte bewegliche Teil 18 weist zwei Schlaufen 20 auf, welche den Querstab 14 umfassen, wobei die Schlaufen 20 nach unten zu Anschlägen 21 weiterentwickelt sind und dann an der Unterseite 15 des ortsfesten Teiles 11 anliegen, wenn sich das bewegliche Teil 18 in Gebrauchslage befindet. Die Schlaufen 20 münden nach oben in einen bügelförmigen Abschnitt 22, dessen Stützen 23 durch Querstäbe 24 verbunden sein können, wobei an den Stützen 23, zu beiden Seiten des beweglichen Teiles 18 also, je eine in Schieberichtung des Einkaufswagens 1 weisende Stützwand 19 ortsfest angeordnet ist, um seitliche Anschläge für auf die Ablage 10 gestellte Gegenstände zu bilden. Die lichte Weite der beiden Stützen 23 ist im Beispiel größer, als die Breite des ortsfesten Teiles 11. Schwenkt oder stößt man nun das bewegliche Teil 18 in seine Nichtgebrauchslage, so liegt in diesem Falle die Querverbindung 25, welche die Stützen 23 in ihrem oberen Bereich verbindet, auf den beiden Stützwänden 19 oder bei Fehlen derselben, auf der Abstellfläche 17 des ortsfesten Teiles 11 auf. Das bewegliche Teil 18 ist in Nichtgebrauchslage außerhalb jenes Raumes angeordnet, den der Korb 7 eines rückwärtigen Einkaufswagens 1' benötigt, wenn dieser in den Korb 7 des vorausbefindlichen Einkaufswagens 1 eingeschoben wird. In der Zeichnung erkennt man, daß die Stützwände 19 des beweglichen Teils 18 über die untere Begrenzung des ortsfesten Teiles 11 hinaus nach unten ragen. Die Stützwand 19, sowohl vom ortsfesten als auch vom beweglichen Teil 11, 18, können als einfache Drahtschlaufen, Bügel u.ä. gestaltet sein. Sie sollen, wie die gesamte Ablage 10 mit relativ großen Öffnungen versehen sein, um Ladendiebstahl zu vermeiden. Es ist natürlich möglich, die Stützwände 19 oder auch die Abstellfläche 17 des ortsfesten Teiles 11 aus Kunststoff zu gestalten. Ebenfalls ist es möglich, daß am beweglichen Teil 18 ein nicht näher dargestellter Ablageabschnitt vorgesehen ist, der zusammen mit dem ortsfesten Teil 11 die gesamte Abstellfläche 17 bildet.

## Patentansprüche

1. Einkaufswagen (1), mit einem Fahrgestell (2), mit einer Schiebeeinrichtung (9) und mit einem mit einer schwenkbaren Rückwand (8) ausgestatteten Korb (7), der von nach oben gerichteten oder von nach oben gekrümmten Trägern (3) des Fahrgestelles (2) getragen wird, wobei der Einkaufswagen (1) so gestaltet ist, daß dieser in einen gleichen Einkaufswagen platzsparend einschiebbar ist und im hinteren Bereich eine aus einem ortsfesten und aus einem beweglichen Teil (11, 18) bestehende, zwischen den Trägern (3) angeordnete Ablage (10) aufweist, die zum Abstellen von weiterem Einkaufsgut bestimmt ist und bei der das bewegliche Teil (18) um eine horizontale Achse (16) bewegbar am ortsfesten Teil (11) so angeordnet ist, daß es in Gebrauchslage einen rückwärtigen Anschlag für auf die Ablage (10) abgestellte Gegenstände bildet und in Richtung zum ortsfesten Teil (11) in die Nichtgebrauchslage und wieder zurück in die Gebrauchslage verschwenkbar ist, dadurch **gekennzeichnet**, daß das bewegliche und/oder das ortsfeste Teil (11, 18) der Ablage (10) mit seitlich angeordneten in Längsrichtung des Einkaufswagens (1) sich erstreckenden Stützwänden (19) ausgestattet ist, welche seitliche Anschläge für die auf der Ablage (10) abgestellten Gegenstände bilden und daß sich die Stützwände (19) in Nichtgebrauchslage des beweglichen Teils (18) ausserhalb jener Räume befinden, welche die Träger (3) eines rückwärtigen Einkaufswagens (1') benötigen, wenn dieser in einen vorausbefindlichen Einkaufswagen (1) eingeschoben wird.

2. Einkaufswagen nach Anspruch 1, dadurch **gekennzeichnet**, daß das bewegliche Teil (18) in Gebrauchslage nur so weit nach oben geführt ist, daß es beim Ineinanderschieben zweier Einkaufswagen (1, 1') weder vom Korb (7), noch von einem anderen Teil des rückwärtigen Einkaufswagens (1') angestoßen wird.

3. Einkaufswagen nach Anspruch 1, dadurch **gekennzeichnet**, daß das bewegliche Teil (18) in Gebrauchslage so weit nach oben geführt ist, daß es beim Ineinanderschieben zweier Einkaufswagen (1, 1') vom Korb (7) oder von einem anderen Teil des rückwärtigen Einkaufswagens (1') angestoßen wird.

4. Einkaufswagen nach einem der Ansprüche 1 bis 3, dadurch **gekennzeichnet**, daß das bewegliche Teil (18) schmäler oder breiter ist, als das ortsfeste Teil (11).

5. Einkaufswagen nach einem der Ansprüche 1 bis 4, dadurch **gekennzeichnet**, daß die Stützwände (19) des beweglichen Teils (18) in dessen Nichtgebrauchslage weiter nach unten reichen, als das ortsfeste Teil (11).

6. Einkaufswagen nach einem der Ansprüche 1 bis 5, dadurch **gekennzeichnet**, daß die Stützwände (19) des beweglichen Teils (18) in dessen Nichtgebrauchslage entweder außerhalb oder innerhalb des ortsfesten Teils (11) angeordnet sind.

7. Einkaufswagen nach einem der Ansprüche 1 bis 6, dadurch **gekennzeichnet**, daß das bewegliche Teil (18) zwei Schlaufen (20) aufweist, welche die horizontale Achse (16) umfassen und zu Anschlägen (21) weiterentwickelt sind, die an der Unterseite (15) des ortsfesten Teiles (11) dann anliegen, wenn sich das bewegliche Teil (18) in der Gebrauchslage befindet.

8. Einkaufswagen nach einem der Ansprüche 1 bis 7, dadurch **gekennzeichnet**, daß sich das bewegliche Teil (18) in Nichtgebrauchslage ausserhalb jenes Raumes befindet, den der Korb (7) eines rückwärtigen Einkaufswagens beansprucht, wenn dieser in den Korb (7) eines vorausbefindlichen Einkaufswagens (1) eingeschoben wird.

9. Einkaufswagen nach einem der Ansprüche 1 bis 8, dadurch **gekennzeichnet**, daß das bewegliche Teil (18) einen Ablageabschnitt aufweist, der zusammen mit dem ortsfesten Teil (11) die Abstellfläche (17) bildet.

## Claims

1. A shopping trolley (1) having a wheel frame (2), a pushing arrangement (9) and a basket (7) provided with a pivotable rear wall (8) and carried by upwardly extending or upwardly curved supports (3) of the wheel frame (2), wherein the shopping trolley (1) is constructed so as to be pushable into a like shopping trolley in a space-saving manner and, in the rear region, has a shelf (10) comprising a fixed and a movable part (11, 18) arranged between the supports (3) and provided for holding further purchases, the movable part (18) being arranged on the fixed part (11) so as to be movable about a horizontal axis (16) in such a manner that it forms a rear stop for objects placed on the shelf (10) in the position of use and is pivotable towards the fixed part (11) into the position of non-use and back again into the position of use, characterised in that the movable and/or the fixed part (11, 18) of the shelf (10) is provided with laterally arranged supporting walls (19) extending in the longitudinal direction of the shopping trolley (1) and forming lateral stops for the objects placed on the shelf (10), and in that, when the movable part (18) is in the position of non-use, the supporting walls (19) are arranged outside those spaces taken up by the supports (3) of a rear shopping trolley (1') when the latter is pushed into a preceding shopping trolley (1).

2. A shopping trolley according to claim 1, characterised in that, in the position of use, the movable part (18) extends only so far upwards that it is not struck either by the basket (7) or by another part of the rear shopping trolley (1') when two shopping trolleys (1, 1') are pushed inside one another.

3. A shopping trolley according to claim 1, characterised in that, in the position of use, the movable part (18) extends so far upwards that it is struck either by the basket (7) or by another part of the rear shopping trolley (1') when two shopping trolleys (1, 1') are pushed inside one another.

4. A shopping trolley according to any one of claims 1 to 3, characterised in that the movable part (18) is narrower or wider than the fixed part (11).

5. A shopping trolley according to any one of claims 1 to 4, characterised in that the supporting walls (19) of the movable part (18) extend further downwards than the fixed part (11) when the movable part (18) is in the position of non-use.

6. A shopping trolley according to any one of claims 1 to 5, characterised in that the supporting walls (19) of the movable part (18) are arranged either outside or inside the fixed part (11) when the movable part (18) is in the position of non-use.

7. A shopping trolley according to any one of claims 1 to 6, characterised in that the movable part (18) has two loops (20) encircling the horizontal axis (16) and extended to form stops (21) resting against the underside (15) of the fixed part (11) when the movable part (18) is in the position of use.

8. A shopping trolley according to any one of claims 1 to 7, characterised in that, in the position of non-use, the movable part (18) is arranged outside the space taken up by the basket (7) of a rear shopping trolley when the latter is pushed into the basket (7) of a preceding shopping trolley (1).

9. A shopping trolley according to any one of claims 1 to 8, characterised in that the movable part (18) has a shelf portion which, together with the fixed part (11), forms the loading surface (17).

## Revendications

1. Chariot à provisions (1) comprenant un châssis (2), un dispositif de poussée (9) et un panier (7) qui est équipé d'une paroi postérieure pivotante (8) et est porté par des supports (3) du châssis (2), dirigés vers haut ou courbés vers le haut, le chariot à provisions (1) étant configuré de façon qu'il puisse être encastré, avec faible encombrement, dans un chariot à provisions identique, et présente, dans la région postérieure, un reposoir (10) interposé entre les supports (3), comprenant des parties fixe et mobile (11, 18), destiné au rangement d'une marchandise supplémentaire, et dans lequel la partie mobile (18) est agencée sur la partie fixe (11), avec mobilité autour d'un axe horizontal (16), de telle sorte qu'elle forme, en position d'utilisation, une butée postérieure pour des objets placés sur le reposoir (10), et qu'elle puisse pivoter à la position de non-utilisation, en direction de la partie fixe (11), puis de nouveau à la position d'utilisation, caractérisé par le fait que la partie mobile et/ou la partie fixe (18, 11) du reposoir (10) est pourvue de parois d'appui (19) disposées latéralement, s'étendant dans la direction longitudinale du chariot à provisions (1) et formant des butées latérales pour les objets déposés sur le reposoir (10) ; et par le fait que les parois d'appui (19) se trouvent, en position de non-utilisation de la partie mobile (18), à l'extérieur des espaces nécessaires aux supports (3) d'un chariot à provisions postérieur (1'), lorsque celui-ci est encastré dans un chariot à provisions précédent (1).

2. Chariot à provisions selon la revendication 1, caractérisé par le fait que la partie mobile (18) s'étend vers le haut, en position d'utilisation, uniquement d'une distance telle que, lors de l'imbrication mutuelle de deux chariots à provisions (1, 1'), ladite partie ne soit heurtée ni par le panier (7), ni par une autre partie du chariot à provisions postérieur (1').

3. Chariot à provisions selon la revendication 1, caractérisé par le fait que la partie mobile (18) s'étend vers le haut, en position d'utilisation, d'une distance telle que, lors de l'imbrication mutuelle de deux chariots à provisions (1, 1'), ladite partie soit heurtée par le panier (7) ou par une autre partie du chariot à provisions postérieur (1').

4. Chariot à provisions selon l'une des revendications 1 à 3, caractérisé par le fait que la partie mobile (18) est plus étroite ou plus large que la partie fixe (11).

5. Chariot à provisions selon l'une des revendications 1 à 4, caractérisé par le fait que, en position de non-utilisation de la partie mobile (18), les parois d'appui (19) de cette dernière dépassent davantage, vers le bas, que la partie fixe (11).

6. Chariot à provisions selon l'une des revendications 1 à 5, caractérisé par le fait que, en position de non-utilisation de la partie mobile (18), les parois d'appui (19) de cette dernière se trouvent soit à l'extérieur, soit à l'intérieur de la partie fixe (11).

7. Chariot à provisions selon l'une des revendications 1 à 6, caractérisé par le fait que la partie mobile (18) présente deux boucles (20) ceinturant l'axe horizontal (16), et prolongées pour former des taquets (21) qui sont plaqués contre la face inférieure (15) de la partie fixe (11) lorsque la partie mobile (18) se trouve dans la position d'utilisation.

8. Chariot à provisions selon l'une des revendications 1 à 7, caractérisé par le fait que la partie mobile (18) se trouve, en position de non-utilisation, à l'extérieur de l'espace requis par le panier (7) d'un chariot à provisions postérieur lorsque celui-ci est encastré dans le panier (7) d'un chariot à provisions précédent (1).

9. Chariot à provisions selon l'une des revendications 1 à 8, caractérisé par le fait que la partie mobile (18) présente une tablette formant la surface de rangement (17) conjointement à la partie fixe (11).
